# EUROPÄISCHE PATENTSCHRIFT

(11) **EP 4 331 760 B1**
(45) Veröffentlichungstag und Bekanntmachung des Hinweises auf die Patenterteilung: **28.01.2026**
(21) Anmeldenummer: 22192988.8
(22) Anmeldetag: 30.08.2022
(51) Int. Cl.: B23B 49/02, B23Q 3/18, B25H 1/00

(54) **ZENTRIERVORRICHTUNG, BEFESTIGUNGSANORDNUNG UND IHRE VERWENDUNG**
CENTERING DEVICE, FIXING ARRANGEMENT AND ITS USE
DISPOSITIF DE CENTRAGE, ENSEMBLE DE FIXATION ET SON UTILISATION

(43) Veröffentlichungstag der Anmeldung: 06.03.2024
(73) Patentinhaber: SFS Group International AG, 9435 Heerbrugg (CH)
(72) Erfinder: Mair, Roland, 6840 Götzis (AT); Kuster, Hanspeter, 9436 Balgach (CH); Andersag, Markus, 6890 Lustenau (AT)

(56) Entgegenhaltungen:
- WO-A1-03/026823
- DE-A1- 3 420 863
- US-A- 3 859 002
- US-A1- 2007 144 096
- US-A1- 2010 088 988
- US-A1- 2012 266 545

## Beschreibung

Die vorliegende Erfindung befasst sich mit einer Zentriervorrichtung, die dazu eingesetzt wird, um einen Befestiger wie eine Bohrschraube oder einen Bohrer selbst innerhalb eines Lochs oder Langlochs an einem vordefinierten Ort zu setzen. Die Zentriervorrichtung ist integral angelegt, ist also ein Teil jenes Bauteils, das mittels eines Befestigers an einer Unterkonstruktion oder einem anderen Bauelement befestigt werden soll.

Ferner wird eine Befestigungsanordnung aus einem Bauteil mit Zentriervorrichtung und Befestiger beschrieben.

### HINTERGRUND

Im Bauwesen werden heute vor allem beim Büro- und Gewerbebau funktionelle Gebäudehüllen geschaffen, die hohe Anforderungen in punkto Sicherheit, Transparenz, Isolation, aber auch Design und Wartbarkeit erfüllen müssen. Speziell bei anspruchsvoller Architektur muss die technische Befestigung von Fassadenelementen so erfolgen, dass das Gesamtbild des Gebäudes nicht negativ beeinträchtigt wird.

Das menschliche Auge ist in der Lage, an einer ebenmässig verkleideten Fassade einzelne, nicht korrekt verarbeitete Fassadenplatten als Abweichungen vom Muster zu erkennen. Das zu vermeiden stellt grosse Anforderungen an die Qualität der Verlegung. Gleichzeitig muss aber berücksichtigt werden, dass wegen der unterschiedlichen thermischen Belastung der Fassadenplatten und der sie tragenden Unterkonstruktion eine Befestigung ausschliesslich mit Fixpunkten nicht möglich ist.

Insbesondere bei schmalen Fugen zwischen Fassadenplatten können Abweichungen im Millimeterbereich bereits problematisch werden. So eine Differenz kann zum Beispiel schon dadurch verursacht werden, dass ein Monteur einen Befestiger nicht punktgenau setzt. Beim Festziehen der Schraube ist es dann durchaus möglich, dass die Fassadenplatte in der Befestigungsebene geringfügig in eine bestimmte Richtung gezogen oder gedrückt wird. Ist der Befestiger dann noch eine selbstfurchende Bohrschraube, die in einer Metallunterkonstruktion oder Holzunterkonstruktion eingreift, sind spätere Korrekturen nur sehr schwer und teuer zu realisieren.

### STAND DER TECHNIK

Im Stand der Technik gibt es grundsätzlich verschiedene Ansätze, um dieses Problem zu lösen. Bekannt sind beispielsweise Bohrlehren wie in der DE 200 08 638 U1 beschrieben. Dabei handelt es sich um eine Führungseinheit für einen Bohrer in Form eines Hohlzylinders, der an seinem zur Bohrseite weisenden Ende eine kegelförmige Anspitzung aufweist. Der Konus wird auf eine Durchgangsbohrung im zu befestigenden Bauteil aufgesetzt. Diese Durchgangsbohrung weist einen Durchmesser grösser als das zu bohrende Loch auf. Nachteilig, insbesondere für die o.a. Anwendung ist, dass der Setzvorgang ein Vorbohren der Unterkonstruktion erfordert und ein weiteres Werkzeug zum Einsatz kommen muss. Alternativ beschreiben die EP 3 960 963 bzw. 3 564 464 Zentrierhülsen, die auf eine Bohrschraube aufgesteckt werden können und während der kritischen Zeitspanne, bis die Spitze einer Bohrschraube sich ins Material eingesenkt hat, die Zentrierung übernimmt.

Bei solchermassen ausgelegten Zentrierhülsen besteht ein Restrisiko, dass Hülsenreste sich im Bohrloch verfangen. Dies kann insbesondere dann auftreten, wenn die Schraube beim Setzen einen hohen Vorschub aufweist und/oder die Hülsenreste nicht schnell genug seitlich ausgeworfen werden können. Insbesondere wenn eine so ausgerüstete Bohrschraube in einer Vertiefung gesetzt werden soll, sind Aufsatzhülsen möglicherweise ungeeignet.

Die Schrift US 2010/088988 A1 beschreibt Fassadenelemente aus Kunststoff, die direkt an einem Substrat befestigt werden können, beispielsweise mit einem Nagel. Hierfür sind im Randbereich des Fassadenelements eine Reihe von Öffnungen vorgesehen, die als längliche Schlitze ausgebildet sind. Eine dünne Materialschicht verengt die Schlitze zu länglichen Öffnungen, die als Zentrierhilfe dienen. An einer definierten Stelle kann eine Aufweitung oder Verengung der länglichen Öffnung vorgesehen oder eine Markierung angebracht werden, um den bevorzugten Einsatzpunkt für den Befestiger anzuzeigen.

Eine Zentriervorrichtung gemäß dem Oberbegriff des Anspruchs 1 ist aus US 2012/266545 A1 bekannt.

Die vorliegende Erfindung hat daher die Aufgabe, die Nachteile des Standes der Technik zu vermeiden, insbesondere eine sichere und einfache Montage von Bauteilen der beschriebenen Gattung zu ermöglichen und ein zentriertes und geführtes Setzen eines Befestigers zu gestatten.

### BESCHREIBUNG DER ERFINDUNG

Als Befestigungspunkt im Sinne dieser Erfindung wird eine Öffnung in einem Bauteil verstanden, durch die ein Befestiger hindurchgeführt werden kann, welcher wiederum nach Abschluss des Setzvorgangs das besagte Bauteil an einer Unterlage oder Unterkonstruktion in definierter Lage hält. Ein Befestigungspunkt kann hierbei sowohl ein Festpunkt wie auch ein Gleitpunkt sein. Speziell bei einem Gleitpunkt wie beispielsweise einem Langloch kann sich das Bauteil entlang der durch die Öffnung vorgegebenen Längsachse in gewissen Grenzen bewegen. Funktionell ähnliche Befestigungspunkte mit strukturellen Unterschieden oder Varianten seien äquivalent mitumfassst.

Konkret wird die Aufgabe durch eine Zentriervorrichtung am Befestigungspunkt eines Bauteils gemäss den Merkmalen des unabhängigen Vorrichtungsanspruchs erzielt. Die abhängigen Merkmale beschreiben nützliche Varianten und Weiterbildungen der Erfindung.

Die vorliegende Erfindung beschreibt eine Zentriervorrichtung, die geeignet und ausgelegt ist zur Führung eines Befestigers oder eines Bohrers während des Setzvorgangs. Die Zentriervorrichtung ist in bzw. an einer Durchgangsöffnung eines Bauteils angeordnet, die Durchgangsöffnung stellt dabei einen Befestigungspunkt des Bauteils dar. Das Bauteil ist ein im Wesentlichen flaches, plattenförmiges Metallteil mit einer Vorderseite und einer Rückseite. Diese beiden definieren zumindest im Bereich des Befestigungspunktes zwei im Wesentlichen parallele Ebenen mit Abstand S. Der Befestigungspunkt stellt somit eine DurchgangsÖffnung im Bauteil zwischen Vorderseite und Rückseite dar. Insbesondere kann das Bauteil eine Lasche oder eine Halterung sein, die einerseits an einem Fassadenelement, andererseits an einer Unterkonstruktion befestigt wird. Die Funktionalität und der Nutzen einer hier beschriebenen Zentriervorrichtung sind aber nicht auf diese Anwendung limitiert.

Die Zentriervorrichtung ist in oder nahe der Ebene der Rückseite in der Durchgangsöffnung angeordnet. Die Vorderseite meint die einem Monteur beim Setzvorgang zugewandte Seite des Bauteiles, die Rückseite weist zur Unterkonstruktion, an der das Bauteil befestigt werden soll.

Eine Zentriervorrichtung selbst besteht im Grundsatz aus einem Kragen und Verbindungselementen zwischen dem Kragen und dem Rand der Durchgangsöffnung. Die Formgebung des Kragens lässt sich als im Wesentlichen flach ringförmig beschreiben und ist aus dem Metall des Bauteils geformt. Der Kragen kann, aber muss nicht wulstförmig sein in dem Sinne, dass er eine grössere Stärke aufweist als die Verbindungselemente. Die zentrale Öffnung des Kragens bildet einen Zentriersitz für einen Befestiger während dessen Setzvorgangs. Der Begriff ringförmig beschreibt hierbei keinen zwingend perfekten Kreisring, sondern kann auch ein etwas irregulär geformtes Gebilde mit einem geschlossenen Rand und einer Zentralöffnung umfassen, solange es funktionell die hier beschriebenen Kriterien erfüllen kann.

Der Kragen ist über mindestens einen Steg, eine Mehrzahl von Stegen bzw. eine Verbindungsfläche mit dem Rand der Durchgangsöffnung des Befestigungspunktes verbunden. Steg und Verbindungsfläche stellen die Verbindungselemente dar; der Kragen wird also durch die Stege bzw. die Verbindungsfläche in der Durchgangsöffnung gehalten. Dadurch wird eine Sollposition des Kragens relativ zum Rand der Durchtrittsöffnung definiert.

Ein Merkmal ist hierbei, dass die Materialstärke h der Steg(e), des Kragens bzw. der Verbindungsfläche deutlich geringer ist als die Stärke S des Metallteils im Bereich um die Durchtrittsöffnung. Mathematisch ausgedrückt gilt also h << S. Die Stärke des Materials wird dabei, wie einem Fachmann geläufig, als die umgangssprachliche Dicke des Materials ermittelt. Wie oben erwähnt, können lokal der Kragen und die Verbindungselemente unterschiedliche Stärken aufweisen, wobei die genannte Bedingung jedoch erfüllt bleibt.

Kragen, Steg(e) bzw. Verbindungsfläche sind bevorzugt integral geformt, also zusammenhängend mit dem Metallteil bzw. Bauteil selbst, ohne ergänzende, eingesetzte, eingefügte, geklemmte oder eingepresste Bauelemente. Ganz besonders bevorzugt werden die Durchgangsöffnung, der Kragen sowie Steg(e) bzw. die Verbindungsfläche durch ein- oder mehrstufige Stanz- und Umformschritte aus dem Bauteil selbst hergestellt. Dadurch wird auch sichergestellt, dass die Zentriervorrichtung unverlierbar mit dem Bauteil verbunden ist.

Ein in der Anwendung nützlicher Wert für die Stärke h eines Kragens bzw. Verbindungselementes beträgt weniger als 1mm, bevorzugt 0.2 bis 0.5mm. Der Innendurchmesser der zentralen Öffnung des (im Wesentlichen) ringförmigen Kragens beträgt dabei zwischen 1.5 und 2.5mm. Der Nenndurchmesser eines passenden Befestigers bzw. Bohrers läge hier bei 2.5 bis ca. 4mm, also in jedem Fall grösser als die zentrale Öffnung des Kragens. Durch entsprechende Skalierung und Anpassen der Stärke h lässt sich die Funktionalität auch auf grössere Durchmesser erweitern. Die Zentrierung wird erzielt, wenn der Kragen eine stützende Wirkung während der ersten eindrehenden Setzbewegung ermöglicht und ein Weggleiten der Spitze des Bohrers oder Befestigers verhindert. Erfahrungsgemäss ist der Kragen bzw. die Zentriervorrichtung obsolet, sobald Bohrer / Befestiger zentriert ins Material der Unterkonstruktion eingreifen.

Für den Fachmann ist es geläufig, dass beispielsweise im Bereich des Fassadenbaus verschiedene Fassadenplatten unterschiedliche Befestigungen erfordern. Dabei wird nicht nur das Gewicht pro Platte eine Rolle spielen, sondern auch deren Grösse, das vorgegebene Raster der Unterkonstruktion und darüber hinaus auch Sicherheits- und Bauvorschriften, die wiederum von berechneten Windlasten und Temperaturschwankungen ausgehen. Diese Vorgaben plus die Zahl der Halterungen pro Platte und die Zahl der Befestiger pro Halterung bestimmen die Dimensionierung der Befestiger unter anderem in Bezug auf Länge, Durchmesser und Gewinde. Ebenso wird dadurch die Anzahl von Fest- und Gleitpunkten bestimmt.

Die hier beschriebene Zentriervorrichtung ist für den Einmalgebrauch ausgelegt: Die Materialstärke ist so gewählt, dass die Zentriervorrichtung durch den Setzvorgang zerstört und aus der Öffnung befördert wird, z.B. durch das Gewinde des Befestigers ausgeworfen. Je nach Einsatzfall, Auslegung und Materialstärke kann das Material der Zentriervorrichtung aber auch radial nach aussen gedrängt, dort verdichtet werden und in der Durchgangsöffnung verbleiben. Dadurch lässt sich unter Umständen auch ein Klemmsitz statt eines reinen Formschlusses des Befestigers in der Durchgangsöffnung erzielen.

Dabei spielt es funktionell eine untergeordnete Rolle, ob der Befestiger eine Bohrspitze, eine Verdrängerspitze oder eine klassische Schraubenspitze aufweist. Die Funktion der Zentrierung durch den Kragen bleibt grundsätzlich dieselbe. Für den Fachmann einleuchtend kann er die Parameter "Stärke h des Kragens" sowie "Durchmesser der zentralen Öffnung des Kragens" an den geplanten Einsatzfall anpassen. So sind auch Befestiger mit Durchmessern von 4mm, 6mm oder mehr denkbar, die durch entsprechende Zentriervorrichtungen geführt werden können. Dabei ist keine lineare Skalierung der Materialstärken des Kragens bzw. der Stege notwendig, weil das anfängliche Einbohren des Befestigers nicht mit dem Volldurchmesser, sondern mit der Spitze erfolgt und nur für diesen ersten Moment die Zentriervorrichtung eine Rolle spielt.

Ein Setzvorgang wird so stattfinden, dass ein Monteur ein Bauteil mit einer entsprechenden Zentriervorrichtung, einen entsprechend bemessenen Befestiger und eine Unterkonstruktion bereitstellt. Er wird das Bauteil an einer vorgegebenen Sollposition an der Unterkonstruktion fixieren - sei es manuell oder durch mechanische Hilfsmittel. Dann kann er den Befestiger mit einem entsprechenden Werkzeug so ansetzen, dass die Spitze des Befestigers in der zentralen Öffnung des Kragens angeordnet wird.

Es ist eine geläufige Erfahrung bei jedem herkömmlichen Setzvorgang, dass ein sehr starker Anfangsdruck auf den Befestiger und damit auf die Unterkonstruktion kontraproduktiv ist, weil es die Neigung der Bohrspitze bzw. des Befestigers verstärkt, seitlich auszuweichen. Dabei spielen nicht vorhersehbare Faktoren wie die Oberflächenbeschaffenheit der Unterkonstruktion (Kerben) wie auch eine nicht perfekte Spitze des Bohrers oder Befestigers oder ein schräges Aufsetzen eine Rolle. Die vorliegende Erfindung minimiert bzw. eliminiert diese Faktoren, indem der Befestiger in den entscheidenden ersten Momenten des Setzvorgangs zwangsgeführt wird. Die oben beschriebene Ausführung aus nur millimeterdünnem Material mag als schwach ausgelegt erscheinen, ist aber ein Vorteil. Ein zu stark ausgeführter Kragen könnte den Haupt-Setzvorgang unnötig stören und zu viel Material in der Durchgangsöffnung kann unerwünscht sein.

Die Erfindung erlaubt in einer weiteren Betrachtungsweise und in der Terminologie der Ansprüche, eine Befestigungsanordnung aus einem Bauteil mit einem Befestigungspunkt mit einer Zentriervorrichtung, wie oben beschrieben. Ferner gehört dazu ein Befestiger, wobei der Befestiger im Wesentlichen einen Kopf mit einem Kraftangriff, einen Unterkopfabschnitt, einen Schaftabschnitt mit Gewinde und einen Spitzenbereich umfasst. Der Spitzenbereich kann als Bohrspitze, Verdrängerspitze oder selbstfurchende Spitze ausgelegt sein.

Der Unterkopfabschnitt weist einen Durchmesser D_{U} auf, der so bemessen ist, dass nach Beendigung des Setzvorgangs dieser Unterkopfabschnitt in der Durchgangsöffnung des Bauteils einen Formschluss in mindestens eine Richtung bildet. Mit anderen Worten, der durch die Zentriervorrichtung gewährleistete präzise Setzvorgang wird den Befestiger relativ zum Rand der Durchgangsöffnung so lokalisieren, dass der Unterkopfabschnitt den Rand an mindestens einem Punkt (bzw. einer Linie) berührt und formschlüssig die Bewegung des Bauteils an diesem Punkt in Richtung des Befestigers hemmt, ohne dass nach dem Setzvorgang das Bauteil ein Nachrutschen in dieser Richtung stattfindet. Eine etwaige Klemmung des Bauteils durch den Kopf sei hierbei nicht berücksichtigt.

Würde ein Befestiger der hier beschriebenen Art, sprich mit einem gegenüber dem Gewindeabschnitt (Schaftabschnitt mit Gewinde) im Durchmesser vergrösserten Unterkopfabschnitt, mit einem Bauteil ohne Zentriervorrichtung eingesetzt, könnte der Setzvorgang zu nahe am Rand der Durchgangsvorrichtung beginnen und der Gewindeabschnitt die Wand der Durchgangsöffnung berühren. Zwangsläufig würde der Befestiger, sobald der Setzvorgang den Übergang zum Unterkopfabschnitt erreicht, eine Kraft senkrecht zur Eindrehrichtung erfahren. Dies würde zu einem Verschieben des Bauteils, einem Kippen des Befestigers oder zu einer Beschädigung des Bauteils führen. Die Zentrierung dagegen bewirkt, dass der lastaufnehmende Unterkopfabschnitt präzise als Anlagefläche für die Wandung der Durchgangsöffnung im Bauteil zur Verfügung steht.

Handelt es sich bei der Durchgangsöffnung um ein Langloch, so kann der Durchmesser D_{U} des Unterkopfabschnitts so gewählt werden, dass er dem Durchmesser quer zur Längsachse des Langlochs entspricht (plus/minus Fertigungstoleranz). Ist die Zentriervorrichtung dann ebenfalls mittig im Querdurchmesser des Langlochs angeordnet, wird der Befestiger exakt so gesetzt, dass der Unterkopfabschnitt in die Langlochöffnung fluchtet, ohne die vorher eingerichtete Sollposition des Bauteils zu verändern. Bei traditionellen Setzvorgängen wird der Befestiger tendenziell das Bauteil zentrieren, während hier das Gegenteil erzielt wird. Bei einem solchen Langloch wird also ein Gleitpunkt in der Längsachse des Langlochs erreicht, während quer dazu ein Formschluss in Soll-Lage gewährleistet bleibt.

Wird ein klassisches Rundloch mit einer erfindungsgemässen Zentriervorrichtung verwendet, wird der Formschluss in alle Richtungen der Befestigungsebene erzielt (Klemmung durch den Schraubenkopf normal zu dieser Ebene nicht berücksichtigt).

Bevorzugt wird das Bauteil, insbesondere wenn es als Befestigungslasche für den Fassadenbau ausgeführt ist, in Aluminium realisiert. Alternativ ist auch eine Ausführung in Stahl durch Stanz- und Umformvorgänge möglich. Nicht zuletzt ist auch eine Ausführung in Kunststoff denkbar, insbesondere faserverstärktem Kunstsoff im Spritzgussverfahren. Dabei würde wiederum das Bauteil incl. Durchgangöffnung mit Zentriervorrichtung integral gefertigt.

In einer alternativen Betrachtungsweise lässt sich die Erfindung auch beschreiben als Verwendung einer Zentriervorrichtung, wie sie oben ausführlich erläutert ist, zur Führung eines Befestigers oder eines Bohrers während dessen Setzvorgangs. Dabei wird, bei Verwendung eines entsprechend ausgelegten Befestigers eine Befestigungsanordnung erzielt wie vorgängig beschrieben.

### KURZBEZEICHNUNG DER FIGUREN

Figur 1 zeigt Bauteil 100 mit verschiedenen Befestigungspunkten in einer Schrägansicht und Seitenansicht.
Figur 2 zeigt drei exemplarische Ausführungen von Durchgangsöffnungen mit Zentriervorrichtungen
Figur 3 zeigt einen Befestiger als Bohrschraube mit einem Unterkopfabschnitt passend zu einer Ausführungsform eines Befestigungspunktes
Figur 4 zeigt eine Befestigungsanordnung

### BESCHREIBUNG DER FIGUREN

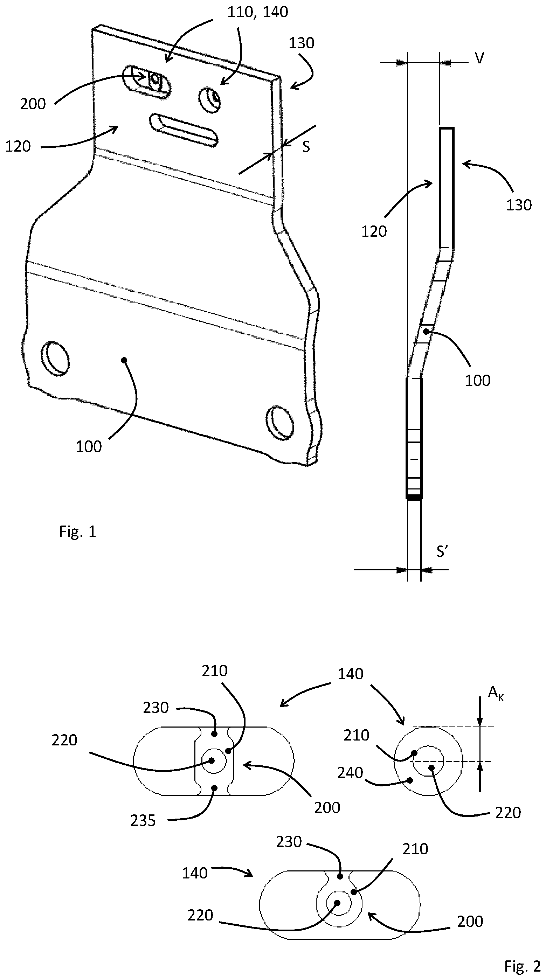

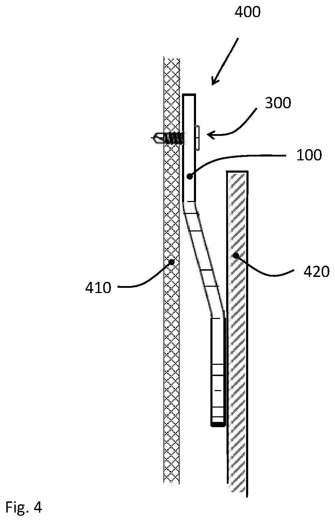

Figur 1 zeigt ein Bauteil 100 mit verschiedenen Befestigungspunkten in einer Schrägansicht links und Seitenansicht rechts. Konkret ist das Bauteil als Lasche ausgeführt, die ein Fassadenelement mit einer Unterkonstruktion verbinden kann, siehe auch Figur 4. Das Metallteil ist als flaches, hier mit einer Kröpfung versehenes Bauteil 100 gezeigt, das an seinem (in der Zeichnung) oberen Drittel ein Langloch sowie eine Rundbohrung mit je einer Zentriervorrichtung 200 zeigt. Darunter befindet sich ein "klassisches" Langloch. Das linke Element der Zeichnung zeigt die Vorderseite 120. Die beiden Öffnungen 140 bilden jeweils einen Befestigungspunkt 110. Die Ausführung als Langloch mit Zentriervorrichtung 200 ermöglicht einen Gleitpunkt, während das rechte Rundloch einen Fixpunkt bildet.

Die Zentriervorrichtung 200 im linken Langloch ist versenkt, in der Ebene der Rückseite 130 abgebildet. Die Stärke des Metallteils ist mit S bezeichnet. In der rechten Abbildung von Figur 1 ist mit S' die Stärke des Metallteils am entgegengesetzten ("unteren") Ende angegeben. Wir haben das Bauteil 100 als ein im Wesentlichen flaches, plattenförmiges Metallteil beschrieben, wie es für die beschriebene Anwendung bekannt und üblich ist. Eine gewisse (auch lokale) Variation der Stärke des Materials (S') ist nicht ungewöhnlich.

Wir haben die Öffnungen 140 als Durchgangsöffnungen beschrieben, weil sie einen Durchlass für den Befestiger 300 bieten. Gleichwohl ist die Zentriervorrichtung am Boden der Öffnung (von vorne betrachtet) bzw. in der Ebene der Rückseite 130 des Bauteils 100 gezeigt; sie verschliesst einen Teil der Durchgangsöffnung 140. Gleichwohl macht dies die Öffnung 140 nicht zu einem Sackloch.

Die in Figur 1 rechts in Seitenansicht gezeigte, gekröpfte Ausführung zeigt einen Versatz um den Abstand V des Unterteils von Bauteil 100 gegenüber dem Oberteil. Dieser Versatz ist bei der gezeigten Ausführungsform nicht zwingend für die Erfindung, sondern eine Bauart.

Figur 2 zeigt drei exemplarische Ausführungen von Durchgangsöffnungen mit Zentriervorrichtungen, die im nachfolgenden mit links, rechts und unten bezeichnet werden.

Die Darstellung links ist eine Durchgangsöffnung 140 als Langloch mit einer einzigen, zentral angeordneten Zentriervorrichtung 200 gezeigt. Der Kragen 210 ist als irregulär geformter Ring um die zentrale Öffnung 220 ausgestaltet, der an zwei gegenüberliegenden Seiten in Stege 230, 235 übergeht, die wiederum in die Längsseiten des Langlochs übergehen. Die Darstellung "unten" zeigt eine Variante eines Langlochs, wobei hier der Kragen 210 nur einseitig via einen Steg 230 mit dem Rand des Langlochs verbunden ist.

Die Darstellung rechts zeigt die Ausführungsform einer Zentriervorrichtung 200 mit einem Rundloch als Durchgangsöffnung 140. Der Kragen 210 um die zentrale Öffnung 220 geht nahtlos in die Verbindungsfläche 240 über, die den Kragen 210 mit dem Rand der Durchgangsöffnung 140 verbindet. Mit A_{K} ist der halbe Durchmesser der Durchgangsöffnung 140 bezeichnet. Dieser Durchmesser entspricht in etwa dem Durchmesser D_{U} des Unterkopfabschnitts des Befestigers 300 mit entsprechend ausgelegten Toleranzen zur Erzielung eines Passsitzes.

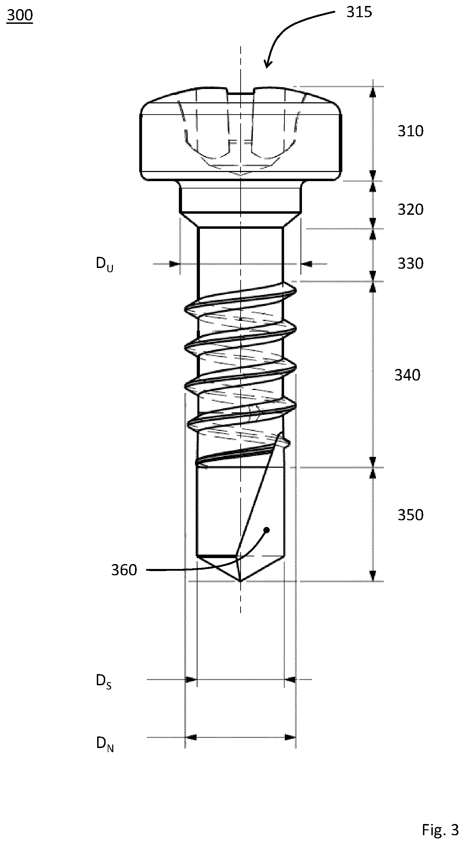

Figur 3 zeigt einen Befestiger 300 als Bohrschraube mit einer Bohrspitze 360. Die wesentlichen Bestandteile sind, in der Figur von oben nach unten gezeigt, der Kopf 310 mit einem versenkt angeordneten Kraftangriff 315, der Unterkopfabschnitt 320 mit Durchmesser D_{U}, ein kurzer gewindefreier Schaftabschnitt 330, eine Schaftabschnitt (340) mit Gewinde und ein Spitzenbereich 350 mit der Bohrspitze 360. Der Nenndurchmesser D_{N} des Befestigers wird wie üblich über die Gewindespitzen vermessen, der Durchmesser der Bohrspitze D_{S} ist bekanntermassen kleiner ausgeführt als DU, um die gewindeformenden Eigenschaften des Abschnitts 340 zu erlauben. Insgesamt gilt D_{S} < D_{N} < D_{U}.

Die Art des Kraftangriffs 315 wird vom Fachmann je nach Anforderung gemäss seinem Fachwissen ausgewählt.

Ein gewindefreier Schaftabschnitt 330 ist bevorzugt; er erlaubt bei entsprechender Dimensionierung der Unterkonstruktion, dass das Gewinde ein tragendes Blech der Unterkonstruktion durchdringt und dieses tragende Blech im Bereich des Abschnitts 330 zu liegen kommt, Dadurch kann vermieden werden, dass beim Überdrehen des Befestigers im Setzvorgang die vom Befestiger (selbstfurchende Bohrschraube) geschaffene Öffnung vom Gewinde des Befestigers ausgerissen wird, was die Auszugskräfte der Befestigungsanordnung massiv beeinträchtigen kann. Das Gewinde 340 kann eingängig oder doppelgängig ausgelegt sein.

Figur 4 zeigt eine Befestigungsanordnung 400 mit einem Fassadenelement 420, an dem ein Bauteil 100 - hier als Lasche ausgeführt - befestigt ist. Mittels des Befestigers 300 kann das Bauteil 100 mit der Unterkonstruktion 410 verschraubt werden. Ein Vorbohren der Unterkonstruktion 420 ist bei Verwendung eines Befestigers 300 analog Figur 3 nicht nötig. Soll ein reiner gewindefurchender, nicht selbstbohrender Befestiger eingesetzt werden, so kann eine Zentriervorrichtung gemäss vorliegender Erfindung auch einem Bohrer dienen, um eine positionsgenaue Öffnung zu schaffen.

## Patentansprüche

1. Zentriervorrichtung (200) zur Führung eines Befestigers (300) oder eines Bohrers während des Setzvorgangs, umfassend ein Bauteil (100) mit mindestens einem Befestigungspunkt (110), wobei das Bauteil (100) ein im Wesentlichen flaches, plattenförmiges Metallteil ist mit einer Vorderseite (120) und einer Rückseite (130), die zwei, zumindest im Bereich des Befestigungspunktes im Wesentlichen parallele Ebenen mit Abstand S definieren; wobei der Befestigungspunkt (110) eine Durchgangsöffnung (140) im Bauteil zwischen Vorderseite (120) und Rückseite (130) darstellt, wobei die Zentriervorrichtung (200) in oder nahe der Ebene der Rückseite (130) in der Durchgangsöffnung (140) angeordnet ist und einen Kragen (210) und Verbindungselemente zwischen dem Kragen und dem Rand der Durchgangsöffnung umfasst, wobei
- der Kragen (210) eine im Wesentlichen flache bis wulstförmige, ringförmige Form aufweist und aus dem Metall des Bauteils geformt ist,
- wobei die zentrale Öffnung (220) des Kragens (210) einen Zentriersitz für einen Befestiger (300) oder Bohrer während des Setzvorgangs bildet;
- und der Kragen über mindestens einen Steg (230, 235) bzw. eine Verbindungsfläche (240) als Verbindungselemente mit dem Rand der Durchgangsöffnung (140) des Befestigungspunktes (110) verbunden ist;
**dadurch gekennzeichnet, dass** für die Materialstärke h der Steg(e) (230, 235), des Kragens (210) bzw. der Vollfläche (240) gilt h << S

2. Zentriervorrichtung (200) nach Anspruch 1, **dadurch gekennzeichnet, dass** deren Kragen (210) und Steg(e) (230, 235) bzw. Verbindungsfläche (240) integral geformt sind, ohne ergänzende, eingesetzte, eingefügte, geklemmte oder eingepresste Bauelemente.

3. Zentriervorrichtung (200) nach Anspruch 1-2, **dadurch gekennzeichnet, dass** die Öffnung (140) des Befestigungspunktes (110), der Kragen sowie Steg(e) bzw. die Verbindungsfläche (240) durch ein- oder mehrstufige Stanz- und Umformschritte aus dem Bauteil (100) selbst hergestellt wird.

4. Zentriervorrichtung (200) nach Anspruch 1-3, **dadurch gekennzeichnet, dass,** in Richtung des vorgegebenen Setzvorgangs gemessen, die Stärke des Kragens weniger als 1mm, bevorzugt 0.2 bis 0.5mm beträgt.

5. Zentriervorrichtung (200) nach Anspruch 1-4, **dadurch gekennzeichnet, dass** der Innendurchmesser der zentralen Öffnung 220 des ringförmigen Kragens (210) zwischen 1.5 und 2.5mm beträgt.

6. Befestigungsanordnung (400) aus einem Bauteil (100) mit einem Befestigungspunkt (110) mit einer Zentriervorrichtung (200) nach Anspruch 1 bis 5 und einem Befestiger (300), wobei der Befestiger (300) im Wesentlichen einen Kopf (310) mit einem Kraftangriff (315), einen Unterkopfabschnitt (320), einen Schaftabschnitt (340) mit Gewinde und einen Spitzenbereich (350) umfasst,
**dadurch gekennzeichnet, dass** der Befestiger (300) im Unterkopfabschnitt (320) einen Durchmesser D_{U} aufweist, der so bemessen ist, dass nach Beendigung des Setzvorgangs dieser Unterkopfabschnitt in der Durchgangsöffnung (140) des Bauteils (100) einen Formschluss in mindestens eine Richtung bildet.

7. Verwendung einer Zentriervorrichtung (200) nach Anspruch 1-5 zur Führung eines Befestigers (300) oder eines Bohrers während dessen Setzvorgangs zur Herstellung einer Befestigungsanordnung nach Anspruch 6.

## Claims

1. Centering device (200) for guiding a fastener (300) or a drill during the setting process, comprising a component (100) having at least one fastening point (110), wherein the component (100) is a substantially flat, plate-shaped metal part with a front side (120) and a rear side (130) that define two substantially parallel planes spaced apart by a distance S, at least in the region of the fastening point; wherein the fastening point (110) represents a through-hole (140) in the component between the front side (120) and the rear side (130), wherein
the centering device (200) is arranged in or near the plane of the rear side (130) in the through-hole (140) and comprises a collar (210) and connecting elements between the collar and the edge of the through-hole, wherein
- the collar (210) has a substantially flat to bead-shaped, annular shape and is formed from the metal of the component,
- wherein the central opening (220) of the collar (210) forms a centering seat for a fastener (300) or drill during the setting process;
- and the collar is connected to the edge of the through-hole (140) of the fastening point (110) via at least one web (230, 235) or connecting surface (240) as connecting elements;
**characterized in that**
the h << S applies to the material thickness h of the web(s) (230, 235), the collar (210) and the solid surface (240).

2. Centering device (200) according to claim 1, **characterized in that** its collar (210) and web(s) (230, 235) or connecting surface (240) are integrally formed without additional, inserted, clamped, or pressed-in components.

3. Centering device (200) according to claims 1-2, **characterized in that** the through-hole (140) of the fastening point (110), the collar and web(s) or the connecting surface (240) are produced from the component (100) itself by means of one or more stages of punching and forming steps.

4. Centering device (200) according to claims 1-3, **characterized in that,** measured in the direction of the specified setting process, the thickness of the collar is less than 1 mm, preferably 0.2 to 0.5 mm.

5. Centering device (200) according to claims 1-4, **characterized in that** the inner diameter of the central opening 220 of the annular collar (210) is between 1.5 and 2.5 mm.

6. Fastening assembly (400) consisting of a component (100) with a fastening point (110) with a centering device (200) according to claims 1 to 5 and a fastener (300), wherein the fastener (300) substantially comprises a head (310) with a force application point (315), an underhead section (320), a threaded shaft section (340) and a tip area (350), **characterized in that** the fastener (300) has a diameter D_{U} in the underhead section (320) which is dimensioned such that, after completion of the setting process, this underhead section forms a positive connection in at least one direction in the through-hole (140) of the component (100).

7. Use of a centering device (200) according to claims 1-5 for guiding a fastener (300) or a drill during its setting process to produce a fastening assembly according to claim 6.

## Revendications

1. Dispositif de centrage (200) pour le guidage d'un élément de fixation (300) ou d'un foret pendant l'opération de mise en place, comprenant une pièce (100) munie d'au moins un point de fixation (110), dans lequel la pièce (100) est une pièce métallique en forme de plaque sensiblement plane avec une face avant (120) et une face arrière (130) qui définissent deux plans sensiblement parallèles à une distance S au moins au niveau du point de fixation, dans lequel le point de fixation (110) représente une ouverture de passage (140) dans la pièce entre la face avant (120) et la face arrière (130),
lequel dispositif de centrage (200) est disposé dans ou près du plan de la face arrière (130) dans l'ouverture de passage (140) et comprend un collet (210) et des éléments de liaison entre le collet et le bord de l'ouverture de passage,
- le collet (210) présentant une forme annulaire sensiblement plate ou en bourrelet et étant formé à partir du métal de la pièce,
- l'ouverture centrale (220) du collet (210) formant une assise de centrage pour un élément de fixation (300) ou un foret pendant l'opération de mise en place ;
- et le collet étant relié au bord de l'ouverture de passage (140) du point de fixation (110) par au moins une barrette (230, 235) ou une surface de liaison (240) servant d'éléments de liaison,
**caractérisé en ce que**, pour l'épaisseur de matériau h de la ou des barrettes (230, 235), du collet (210) ou de la surface pleine (240), on a h << S.

2. Dispositif de centrage (200) selon la revendication 1, **caractérisé en ce que** son collet (210) et sa ou ses barrettes (230, 235) ou la surface de liaison (240) sont formés d'une pièce, sans composants complémentaires insérés, serrés ou pressés en place.

3. Dispositif de centrage (200) selon la revendication 1-2, **caractérisé en ce que** l'ouverture (140) du point de fixation (110), le collet et la ou les barrettes ou la surface de liaison (240) sont fabriqués à partir de la pièce (100) même par des étapes de découpe à l'emporte-pièce et de formage en une ou plusieurs temps.

4. Dispositif de centrage (200) selon la revendication 1-3, **caractérisé en ce que**, mesurée dans le sens de l'opération de mise en place prédéfinie, l'épaisseur du collet est de moins de 1 mm, de préférence de 0,2 à 0,5 mm.

5. Dispositif de centrage (200) selon la revendication 1-4, **caractérisé en ce que** le diamètre intérieur de l'ouverture centrale (220) du collet annulaire (210) mesure entre 1,5 et 2,5 mm.

6. Dispositif de fixation (400) composé d'une pièce (100) munie d'un point de fixation (110) avec un dispositif de centrage (200) selon la revendication 1 à 5 et d'un élément de fixation (300), dans lequel l'élément de fixation (300) comprend pour l'essentiel une tête (310) avec une structure d'application de force (315), une partie sous la tête (320), une partie de tige (340) avec un filetage et une partie de pointe (350), **caractérisé en ce que** l'élément de fixation (300) présente dans la partie sous la tête (320) un diamètre D_{U} dimensionné de telle façon que, après la fin de l'opération de mise en place, cette partie sous la tête forme dans l'ouverture de passage (140) de la pièce (100) un engagement positif dans au moins une direction.

7. Utilisation d'un dispositif de centrage (200) selon la revendication 1-5 pour guider un élément de fixation (300) ou un foret pendant sa mise en place pour créer un dispositif de fixation selon la revendication 6.
